# FASCICULE DE BREVET EUROPEEN

(11) **EP 2 551 153 B1**
(45) Date de publication et mention de la délivrance du brevet: **19.12.2018**
(21) Numéro de dépôt: 12177450.9
(22) Date de dépôt: 23.07.2012
(51) Int. Cl.: B60Q 1/076

(54) **ENSEMBLE D'UN SUPPORT DE MODULE OPTIQUE ET D'UN DISPOSITIF DE LIAISON APTE À RECEVOIR UN MOYEN DE RÉGLAGE DE LA POSITION DE SUPPORT**
Halterungssystemeinheit für ein optisches Modul und eine Anschlussvorrichtung, die ein Regulierungsmittel für die Position der Halterung aufnehmen kann
Assembly of an optical module support and a connecting device able to receive a means for adjusting the support position

(30) Priorité: 26.07.2011 FR 1156830
(43) Date de publication de la demande: 30.01.2013
(73) Titulaire: VALEO VISION, 93012 Bobigny Cedex (FR)
(72) Inventeur: Bakacha, Malik, 44370 Belligné (FR); Puente, Jean-Claude, 93190 LIVRY GARGAN (FR)

(56) Documents cités:
- EP-A1- 0 330 884
- EP-A1- 0 393 366
- EP-A1- 1 710 122
- EP-A1- 2 279 907
- EP-A1- 2 383 146
- EP-A2- 1 544 033
- DE-A1-102005 031 773
- US-A1- 2002 085 386

## Description

L'invention concerne un ensemble d'un support de module optique et d'un dispositif de liaison apte à recevoir un moyen de réglage de la position du support. Un tel ensemble est destiné à s'insérer dans un projecteur et de manière générale dans tout dispositif d'éclairage et/ou de signalisation, en particulier pour véhicule automobile.

De tels projecteurs comprennent une source lumineuse qui projette de la lumière sur un réflecteur. La lumière est ensuite réfléchie sur une lentille afin d'être projetée dans l'environnement extérieur en particulier sur la route. Le projecteur peut fonctionner selon un mode dit « feu de code » permettant au projecteur d'éclairer la route à moyenne distance sans éblouir les autres usagers. Lorsque ce mode de fonctionnement est activé, un obturateur du faisceau est positionné devant le réflecteur afin d'éviter que le faisceau lumineux ne s'étende trop vers le haut et ne gêne la vision de personnes situées en face du véhicule. L'obturateur permet ainsi au faisceau de comprendre une limite supérieure appelée « coupure ».

US 2002/0085386 A1 décrit un projecteur connu dans lequel des moyens de réglage provoquent un coulissement horizontal de pièces de liaison qui relient un réflecteur au boîtier du projecteur.

Pour faire varier la hauteur du faisceau lumineux émis par le projecteur quand celui-ci est en code, il est connu d'utiliser un correcteur lié à un support portant le réflecteur. En actionnant le correcteur, on transmet un mouvement au support et donc au réflecteur, ce qui entraîne une adaptation de la hauteur du faisceau en fonction de diverse paramètres, comme par exemple l'assiette du véhicule.

Afin que le projecteur soit homologué, la coupure du projecteur ne doit pas changer de plus de 0,1 % de variation angulaire après une heure de fonctionnement du projecteur. Pendant cette période, la source de lumière émet de la chaleur et la température interne du projecteur est amenée à augmenter. Or, le correcteur et le boîtier qui le supporte étant en plastique, ils se dilatent et le correcteur transmet alors un mouvement au support et donc au réflecteur. La conséquence de la dilatation du correcteur est ainsi de changer la hauteur du faisceau et donc de modifier la position de la coupure en risquant de dépasser les 0,1% de variation angulaire autorisé.

L'invention vise à améliorer cette situation.

Elle propose à cet effet un ensemble tel que défini dans la revendication 1. Selon l'invention, l'axe de coulissement est orienté selon un angle d'inclinaison compris entre 5° et 45° par rapport à un axe vertical.

Le dispositif de liaison est ainsi apte à laisser libre le déplacement du moyen de réglage selon une direction d'extension longitudinale de la première portion, c'est-à-dire selon la direction de l'axe de coulissement. Ainsi, lorsque le moyen de réglage se dilate, il se déplace, notamment, à l'intérieur du dispositif de liaison et le déplacement dans la direction d'orientation de l'axe de coulissement n'entraîne pas de mouvement du dispositif de liaison et n'influe donc pas sur l'orientation du faisceau, en particulier sa hauteur.

Selon un aspect de l'invention, le module optique projette un faisceau lumineux selon un axe optique, ledit axe de coulissement étant situé dans un plan, dit plan longitudinal, qui passe par l'axe optique et l'axe vertical. De cette manière, le dispositif de liaison autorise un déplacement du moyen de réglage selon l'orientation de l'axe de coulissement dans le plan longitudinal, c'est-à-dire vers l'avant du projecteur, vers l'arrière du projecteur et/ou selon la direction vertical par rapport au projecteur.

Selon un autre aspect de l'invention, ladite première portion comprend une partie supérieure et une partie inférieure, ladite partie supérieure étant dirigée vers ledit support. On comprend ici que la partie supérieure est située au dessus de la partie inférieure selon l'axe vertical et plus proche du support que la partie inférieure selon l'axe optique. Le moyen de réglage ayant tendance à se dilater vers le haut et vers l'avant, le dispositif de liaison orienté de cette manière autorise un tel déplacement du moyen de réglage sans engendrer de mouvement du dispositif de liaison.

L'angle d'inclinaison est compris entre 5° et 45°. Dans le cas où le déplacement du moyen de réglage dû à sa dilatation suit une orientation de 30° par rapport à la verticale, dans le plan longitudinal et vers l'avant, on choisit de manière particulièrement avantageuse l'angle d'inclinaison sensiblement égal à 30°. En appelant Dx le déplacement du moyen de réglage selon l'axe optique et vers l'avant, c'est-à-dire vers le support, et Dz le déplacement du moyen de réglage selon l'axe vertical et vers le haut, le déplacement du dispositif de liaison vers l'avant dû à la dilation du moyen de réglage est égal à Dx - Dz x tan (angle d'inclinaison), en particulier Dx - Dz x tan (30°).

Selon un autre exemple de réalisation, l'angle d'inclinaison est ajustable. On peut ainsi optimiser l'orientation de l'axe de coulissement afin de limiter au maximum les déplacements non souhaités du dispositif de liaison dus à la dilatation du moyen de réglage. Le choix de l'orientation de l'axe de coulissement peut également se faire en fonction de nombreux paramètres comme par exemple ceux liés à la structure et/ou à la forme du projecteur dans lequel l'ensemble conforme à l'invention est installé. Cela permet de standardiser l'ensemble selon l'invention pour plusieurs types de projecteur, en particulier des projecteurs où l'angle d'inclinaison peut varier d'un produit à l'autre, ou d'un modèle de véhicule à un autre modèle de véhicule. On comprend de ceci qu'un même ensemble selon l'invention peut se trouver dans différents modèles de projecteur.

Selon un aspect de l'invention, l'ensemble comprend une pièce intermédiaire s'emmanchant dans le support et recevant le dispositif de liaison.

Selon un autre aspect de l'invention, une première partie de la pièce intermédiaire s'étend longitudinalement selon une direction parallèle à l'axe optique, une deuxième partie de la pièce intermédiaire s'étend longitudinalement selon une direction perpendiculaire à l'axe de coulissement, la première partie formant un angle avec la deuxième partie, dit angle intermédiaire. Cet angle intermédiaire est, notamment, ajustable. Le dispositif de liaison étant solidaire de la pièce intermédiaire, en ajustant l'angle intermédiaire, on ajuste l'angle d'inclinaison.

Selon un aspect de l'invention, la pièce intermédiaire comprend un arbre de rotation autour duquel la première et/ou la deuxième partie est apte à pivoter et un système de blocage apte à bloquer la deuxième partie par rapport à la première partie. Ainsi, on peut ajuster l'angle intermédiaire grâce, notamment à l'arbre de rotation, puis le fixer, en particulier, grâce au système de blocage afin de ne pas empêcher la fonction première du moyen de réglage, c'est-à-dire la correction de la position du faisceau en fonction de paramètres du véhicule, par exemple, la hauteur de caisse. Il est ainsi possible d'utiliser le même ensemble conforme à l'invention pour des utilisations nécessitant des valeurs de l'angle d'inclinaison différentes, par exemple, sur des modèles de dispositifs d'éclairage et/ou de signalisation possédant des valeurs optimisées de l'angle d'inclinaison différentes. On standardise ainsi l'ensemble selon l'invention tout en le rendant adaptable à plusieurs modèles de dispositif d'éclairage et/ou de signalisation.

Selon un exemple de réalisation, le dispositif de liaison comprend une deuxième portion s'emmanchant dans le support et/ou dans la pièce intermédiaire, ladite deuxième portion s'étendant longitudinalement selon une direction parallèle à l'axe optique. De manière alternative, ladite deuxième portion s'étend longitudinalement selon une direction perpendiculaire à l'axe de coulissement.

Selon un autre exemple de réalisation, ledit ensemble comprend ledit moyen de réglage de position du support.

Selon un aspect de l'invention, la première portion du dispositif de liaison est une glissière dont le degré de liberté en translation s'étend selon l'axe de coulissement, ladite glissière comprenant une paroi définissant un volume interne et une ouverture s'étendant dans un plan parallèle à l'axe de coulissement, le moyen de réglage de position comprenant un corps duquel débouche une tige munie à une première extrémité distale d'un moyen d'accrochage apte à se déplacer à l'intérieur dudit volume interne. Le moyen d'accrochage est ainsi au contact du dispositif de liaison et permet de le déplacer lorsque le mouvement du moyen de réglage ne suit pas la direction de l'axe de coulissement. Ladite paroi est, notamment, cylindrique. Le plan dans lequel s'étend l'ouverture est, par exemple, perpendiculaire au plan longitudinal.

Selon un autre aspect de l'invention, ledit moyen d'accrochage est une sphère coupée selon une direction parallèle à l'axe de coulissement. La sphère peut ainsi coulisser dans la glissière selon l'axe de coulissement, la partie coupée de la sphère étant en contact avec une face interne de la paroi définissant le volume interne de la glissière. La partie coupée de la sphère empêche ainsi la sphère et donc la tige d'effectuer un mouvement différent de la translation selon l'axe de coulissement par rapport au dispositif de liaison.

Selon un exemple de réalisation, la tige s'étend longitudinalement selon une direction perpendiculaire à l'axe de coulissement. De manière alternative, la tige s'étend selon une direction parallèle à l'axe optique.

Selon un autre exemple de réalisation, la tige comprend une première zone en contact avec le corps qui s'étend longitudinalement selon une direction parallèle à l'axe optique et une deuxième zone en contact avec le dispositif de liaison qui s'étend longitudinalement selon une direction perpendiculaire à l'axe de coulissement, la première et la deuxième zone formant un angle, dit angle tige. Cet angle tige est, par exemple, ajustable.

L'invention concerne aussi un dispositif d'éclairage et/ou de signalisation pour véhicule comprenant un boîtier formé par un élément transparent, ledit boîtier et ledit élément transparent délimitant un volume interne dans lequel est installé un module optique, caractérisé en ce qu'il comprend un ensemble selon l'une quelconque des revendications précédentes.

Selon un autre aspect de l'invention, ledit moyen de réglage de la position du support est directement relié mécaniquement au boîtier.

Les figures annexées feront bien comprendre comment l'invention peut être réalisée. Sur ces figures, des références identiques désignent des éléments semblables.
- La figure 1 est une vue schématisée en coupe d'un dispositif d'éclairage et/ou de signalisation comprenant un ensemble conforme à l'invention ;
- La figure 2 est une vue schématisée en coupe d'un dispositif de liaison et d'un moyen de réglage de la position du support ;
- La figure 3 est une vue schématisée en coupe d'une variante de réalisation de l'ensemble représenté à la figure 1 ;
- La figure 4 est une vue schématisée en coupe d'un moyen de réglage de la position du support et d'un ensemble conforme à l'invention comprenant une pièce intermédiaire ;
- La figure 5 est une vue en perspective d'un exemple de dispositif de liaison et d'un moyen de réglage de la position du support conformes à l'invention ;
- La figure 6 est une vue en coupe du dispositif de liaison et du moyen de réglage de la position du support représentés à la figure 5 ;
- La figure 7 est une vue schématisée du dispositif de liaison et du moyen de réglage de la position du support représentés à la figure 2 selon une variante de réalisation, et
- La figure 8 est une vue schématisée du dispositif de liaison et du moyen de réglage de la position du support représentés à la figure 7 selon une variante de réalisation.

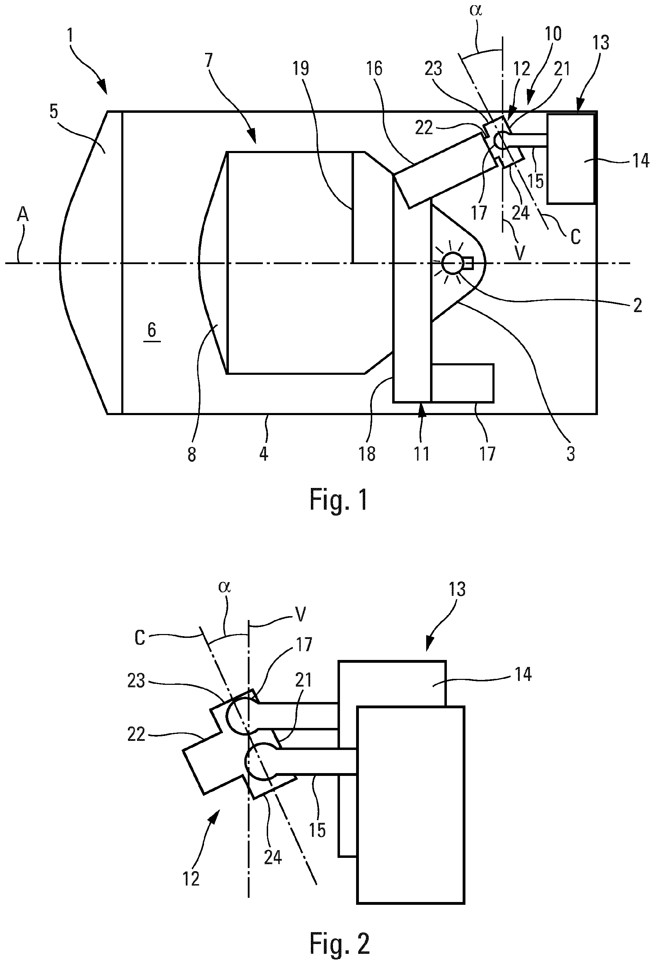

L'invention pourra trouver son application dans un dispositif d'éclairage et/ou de signalisation pour véhicule tel que représenté sur la figure 1. Ce dispositif d'éclairage et/ou de signalisation de véhicule est par exemple un projecteur 1. Il est représenté selon une coupe verticale effectuée dans le sens de la longueur du projecteur 1.

Dans la suite de la description, les références avant, arrière, haut et bas sont définies par rapport au sens de marche du véhicule sur lequel le projecteur est monté.

Sur la figure 1, le projecteur 1 est destiné à équiper un véhicule automobile, pour la projection d'un faisceau lumineux sur la route emprunté par le véhicule. Le projecteur 1 comprend un boîtier 4 et un élément transparent, notamment une glace ou une plaque transparente de polycarbonate 5, délimitant avec le boîtier 4 un volume interne 6 du projecteur 1. A l'intérieur du volume interne 6 se trouve un module optique 7, notamment elliptique, comprenant une lampe 2, telle qu'une lampe à incandescence, à décharge, à diode électroluminescente ou analogue. Le module optique 7 comprend également une lentille 8 et un réflecteur 3, entourant la lampe 2 et dont le rôle est de concentrer la lumière produite par la lampe 2 vers la lentille 8 et en particulier vers un axe optique A du projecteur 1, défini par le centre de la lentille 8. Le module optique 7, le réflecteur 3, la lampe 2 et la lentille 8 sont ainsi centrés par rapport à l'axe optique A du projecteur 1. On représente également un axe vertical V, perpendiculaire à l'axe optique A, représentant la vertical et formant avec l'axe optique A un plan longitudinal dans lequel est réalisé la coupe de la figure 1.

Un obturateur 19 est positionné dans le volume interne 6 afin d'obturer en partie le faisceau lumineux lorsque le mode de fonctionnement du projecteur 1 correspond au feu de code, c'est-à-dire lorsque que l'utilisateur souhaite éclairer la route à proche et moyenne distance sans éblouir des personnes pouvant se situer en face. L'obturateur délimite une limite supérieure, c'est-à-dire une coupure du faisceau, qui doit rester le plus stable possible pendant le fonctionnement du projecteur 1.

A l'intérieur du volume interne 6 se trouve également un ensemble 10 conforme à l'invention. Un tel ensemble 10 comprend un support 11 du module optique 7 et un dispositif de liaison 12 apte à recevoir un moyen de réglage 13 de la position du support 11, en particulier un correcteur de hauteur du faisceau 13.

Le support 11 porte ici le module optique 7, en particulier le réflecteur 3. Il est solidarisé au boîtier 4. Le support 11 comprend une base 18 qui supporte le module optique 7 et qui s'étend majoritairement dans un plan perpendiculaire à l'axe optique. De la base 18 naissent deux branches 16, 17, une première branche 16 étant située au niveau d'une extrémité supérieure de la base 18 et une deuxième branche 17 étant située au niveau d'une extrémité inférieure de la base 18 et s'étendant dans un plan parallèle à l'axe optique A et perpendiculaire au plan longitudinal.

Le dispositif de liaison 12 est mécaniquement lié au support 11 et comprend une première portion 21 qui reçoit une partie du moyen de réglage 13 et une deuxième portion 22 qui fait la liaison mécanique avec le support 11, par exemple en s'emmanchant à l'intérieur du support 11 de manière hyperstatique. La première portion 21 comprend une partie supérieure 23 et une partie inférieure 24, la partie supérieure 23 étant située au dessus de la partie inférieure 24 par rapport à l'axe vertical V.

Le moyen de réglage 13 est ici relié mécaniquement et de manière solidaire au boîtier 4. Le moyen de réglage 13 comprend un corps 14 duquel débouche une tige 15 à l'extrémité de laquelle se situe un moyen d'accrochage 17, notamment une sphère 17. La tige 15 s'étend ici longitudinalement selon une direction perpendiculaire au corps 14 et est notamment apte à se déplacer par rapport au corps 14 selon sa direction d'extension longitudinale. Le moyen d'accrochage 17 se situe à l'intérieur du dispositif de liaison 12, par exemple à l'intérieur de la première portion 21. Lorsque le conducteur souhaite régler la direction du faisceau lumineux émis par le projecteur 1, il actionne le moyen de réglage 13 qui transmet un mouvement au dispositif de liaisons 12, qui à son tour le transmet au support 11 faisant ainsi changer l'orientation, en particulier la hauteur, du module optique 7 et donc du faisceau lumineux. C'est en particulier la tige 15 qui se déplace par rapport au corps 14 pour régler l'orientation du faisceau lumineux.

Selon l'invention, la première portion 21 du dispositif de liaison 12 s'étend selon un axe, dit axe de coulissement C, orienté selon un angle d'inclinaison α supérieur à 5° par rapport à l'axe vertical V de manière à autoriser le déplacement du moyen de réglage 13 selon la direction de l'axe de coulissement C quand le boîtier 4 se dilate et entraîne un déplacement du moyen de réglage 13.

Dans l'exemple illustré à la figure 1, l'axe de coulissement C est situé dans le plan longitudinal et fait un angle α compris entre 5° et 45° avec l'axe vertical V, par exemple 30°. En particulier, la partie supérieure 23 de la première portion 21 est dirigée vers le support 11. On comprend ici que la distance entre la partie supérieure 23 et la base 18 du support 11 est moins important que la distance entre la partie inférieure 24 et la base 18 du support 11, selon l'axe optique A.

La deuxième portion 22 du dispositif de liaison 12 s'emmanche par exemple dans la première branche 16 du support 11 qui s'étend ici longitudinalement selon une direction perpendiculaire à l'axe de coulissement C. Ainsi, la deuxième portion 22 s'étend longitudinalement selon une direction perpendiculaire à l'axe de coulissement C.

De cette manière, il est possible de régler l'inclinaison en fonction de la direction prise par la tige 15 suite à la dilatation du corps 14 du correcteur 13. Cette dilatation a tendance à déplacer la tige 15 vers le haut et vers l'avant du projecteur 1. C'est pourquoi on choisit une première portion 21 qui autorise le déplacement de la tige 15 dans le plan longitudinal, vers le haut et vers l'avant selon l'angle d'inclinaison α compris entre 5° et 45° par rapport à la verticale V. Lorsque la tige se déplace dans le dispositif de liaison 12 selon cet angle a, elle n'engendre pas de déplacements non souhaités.

Un exemple de ce déplacement du moyen de réglage 13 est illustré à la figure 2. En position initiale, le moyen de réglage 13 se situe en bas à droite de la figure 2, le moyen d'accrochage 17 de la tige 15 étant située au niveau de la partie inférieure 24 de la première portion 21 du dispositif de liaison 12. Lorsque le projecteur fonctionne, la lampe chauffe et la température à l'intérieur du volume interne augmente. Le boîtier, en plastique, se dilate et fait changer la position du moyen de réglage 13, notamment vers le haut et vers l'avant. La tige 15 du moyen de réglage 13 se déplace alors vers le haut, par rapport à l'axe vertical V et vers l'avant par rapport à l'axe optique, c'est-à-dire vers la lentille. Le moyen d'accrochage 17 coulisse alors à l'intérieur de la première portion 21, jusqu'à une deuxième position du moyen de réglage 13, représenté plus haut et plus à gauche sur la figure 2 et dans le cas où ce déplacement suit l'axe de coulissement C, le moyen de réglage 13 n'entraîne pas de déplacement du dispositif de liaison 12.

En appelant Dx le déplacement du moyen de réglage 13 selon l'axe optique A (Dx étant positif vers l'avant) et Dz le déplacement du moyen de réglage 13 selon l'axe vertical (Dz étant positif vers le haut), le déplacement du dispositif de liaison 12 selon l'axe optique A est égal à Dx - Dz x tan (angle d'inclinaison), ici Dx - Dz x tan(30°).

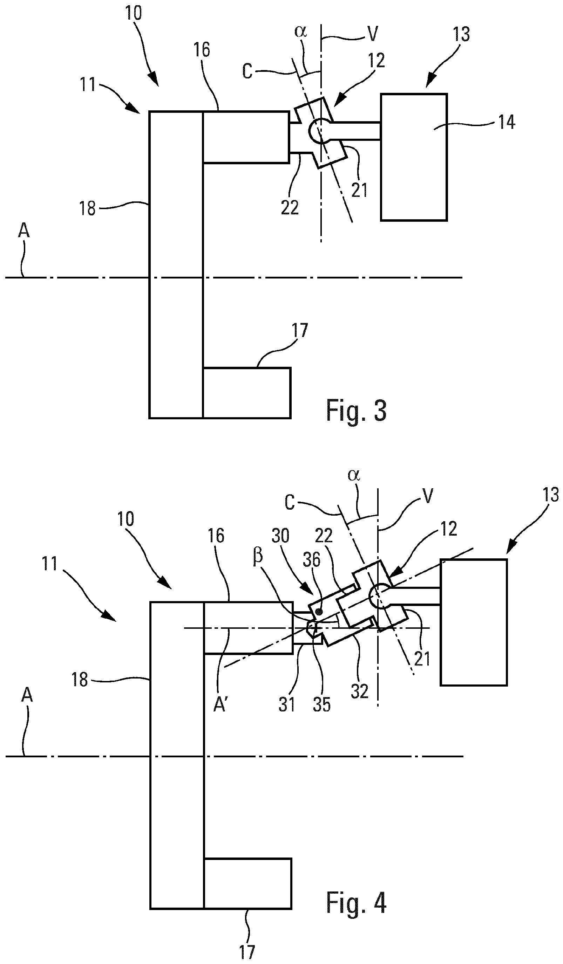

La figure 3 permet d'illustrer une variante de réalisation selon laquelle la deuxième portion 22 du dispositif de liaison 12 s'étend longitudinalement selon une direction parallèle à l'axe optique A. Dans cette variante de réalisation, la première branche 16 s'étend dans un plan parallèle à l'axe optique A et perpendiculaire au plan dans lequel s'étend la base 18 du support 11.

La figure 4 illustre une variante de l'invention selon laquelle l'ensemble 10 comprend une pièce intermédiaire 30 s'emmanchant dans le support 11 et recevant le dispositif de liaison 12. On comprend par pièce intermédiaire 30 une pièce située entre le support 11 et le dispositif de liaison 12. C'est en particulier une première partie 31 de la pièce intermédiaire 30 qui s'emmanche dans le support 11 et une deuxième partie 32 qui reçoit le dispositif de liaison 12. La première partie 31 s'étend ici longitudinalement selon un axe A' parallèle à l'axe optique A. La deuxième partie 32 s'étend longitudinalement selon une direction perpendiculaire à l'axe de coulissement C, c'est-à-dire parallèlement à la deuxième portion 22 du dispositif de liaison 12. La première partie 31 forme un angle avec la deuxième partie 32, dit angle intermédiaire β.

L'angle intermédiaire β est, par exemple, ajustable grâce, notamment, à un système de blocage 36 et à un arbre 35 inséré dans la première et la deuxième partie 31, 32 et autour duquel elles peuvent tourner. L'arbre 35 permet ici de faire varier la position angulaire de la deuxième partie 32 par rapport à la première partie 31. Le système de blocage 36, notamment un système cranté, une vis ou un soudage plastique de la première partie 31 sur la deuxième partie 32, permet de bloquer la position de la deuxième partie 32 par rapport à la première partie 31. On comprend donc que l'ajustage de l'angle est reporté sur la pièce intermédiaire 30, le dispositif de liaison 12 étant ainsi standard pour plusieurs types ou gammes de véhicule.

La pièce intermédiaire 30 étant solidaire du dispositif de liaison 12, en faisant varier l'angle intermédiaire β, par exemple d'un secteur angulaire de 40°, on fait varier l'angle d'inclinaison a, notamment, entre 5° et 45° par rapport à l'axe vertical V comme vu précédemment. Ainsi, avant le montage de l'ensemble dans le dispositif d'éclairage et/ou de signalisation et en fonction de l'angle d'inclinaison α souhaité, on fait varier l'angle intermédiaire β en faisant pivoter la deuxième partie 32 autour de l'arbre 35, puis on la solidarise dans une position finale à la première partie 31 grâce au système de blocage 36.

Pour cela, l'angle intermédiaire β couvre, par exemple, un secteur angulaire de 40°, compris entre une première position angulaire à 5° par rapport à l'axe A' parallèle à l'axe optique A et une deuxième position angulaire à 45° par rapport à l'axe A' parallèle à l'axe optique A. La rotation de la deuxième portion 32 autour de l'arbre 35 permet ainsi à l'axe de coulissement C du dispositif de liaison 12 de pouvoir s'incliner selon toutes valeurs de l'angle α comprises entres 5° et 45°, comme vu précédemment.

Dans cet exemple de réalisation, la deuxième portion 22 s'emmanche dans la pièce intermédiaire 30, et s'étend toujours longitudinalement selon une direction perpendiculaire à l'axe de coulissement C.

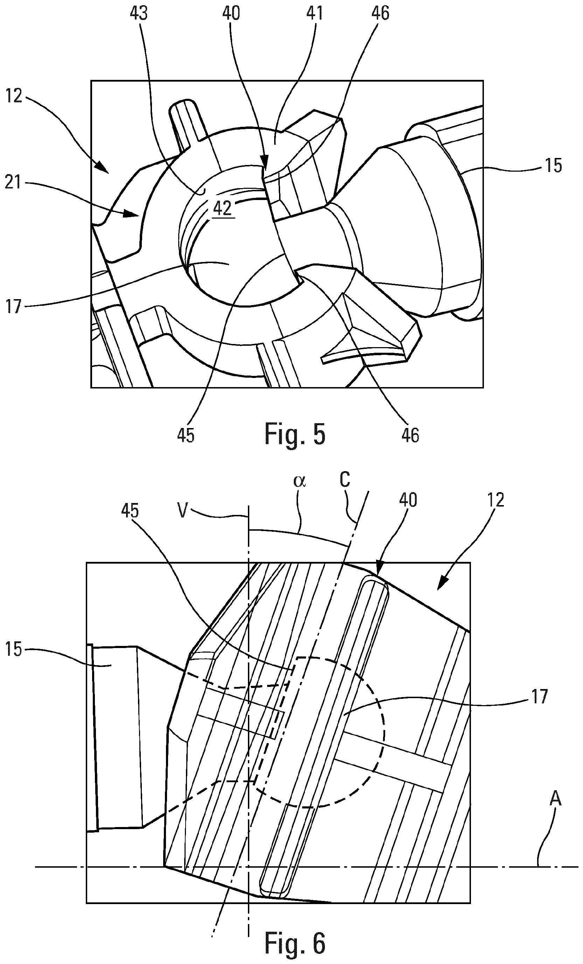

Un exemple de dispositif de liaison 12 est illustré sur les figures 5 et 6. La première portion 21 du dispositif de liaison 12 est ici une glissière 40 dont le degré de liberté en translation s'étend selon l'axe de coulissement. La glissière 40 comprend une paroi 41 définissant un volume interne 42 et une ouverture qui s'étend selon un plan parallèle à l'axe de coulissement et perpendiculaire au plan longitudinal. La paroi est ici de forme cylindrique.

La paroi 41 de la glissière 40 comprend une face interne 43 au contact du moyen d'accrochage 17, ici la sphère 17. La sphère 17 est située au niveau de l'extrémité distale de la tige 15 et est apte à se déplacer à l'intérieur du volume interne 42. On remarque sur la figure 6 que la sphère 17 possède une forme générale sphérique et qu'elle est coupée suivant une direction parallèle à l'axe de coulissement C. Dans le cas où la tige 15 s'étend parallèlement à l'axe optique A, la sphère est ainsi coupée dans un plan perpendiculaire au plan longitudinale et incliné selon l'angle α + 90° par rapport à la direction d'extension de la tige 15. Dans une variante où la tige s'étend perpendiculairement à l'axe de coulissement C, la sphère est ainsi coupée dans un plan perpendiculaire au plan longitudinal et perpendiculaire à la direction d'extension de la tige 15.

La coupure de la sphère 17 définie une surface plane 45 qui se trouve, par exemple, au contact de deux excroissances 46, prolongeant la face interne 43 de la paroi 41 et entre lesquelles est définie l'ouverture de la glissière 40. Le contact entre la surface plane 45 et les excroissances 46 empêche ainsi le mouvement de la tige 15 par rapport à la glissière 40 selon une direction perpendiculaire à l'axe de coulissement C. De cette manière seul un déplacement du moyen de réglage parallèle à l'axe de coulissement C est possible sans engendrer de mouvement du dispositif de liaison.

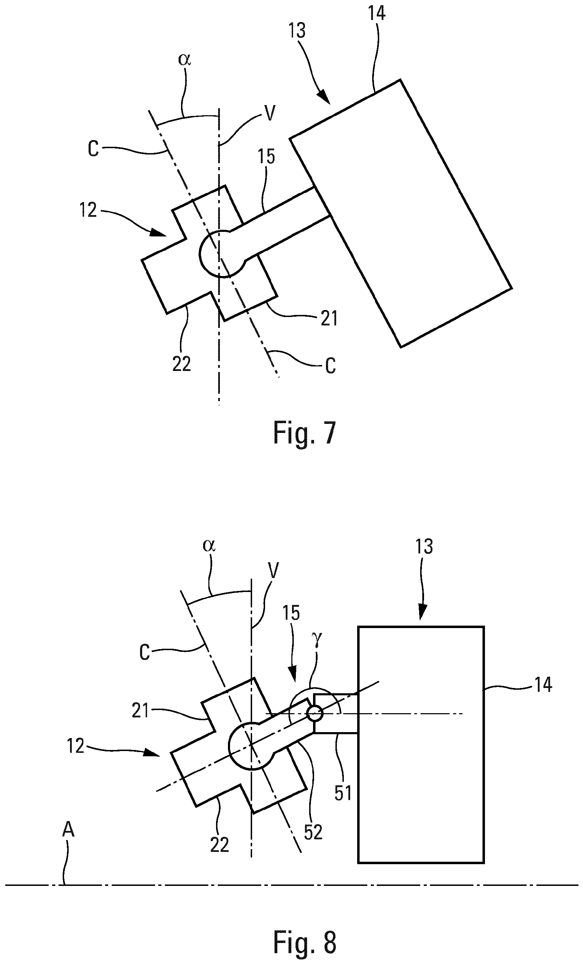

La figure 7 permet de représenter une variante de réalisation selon laquelle le corps 14 du moyen de réglage 13 est orienté parallèlement à l'axe de coulissement C de sorte que la tige 15 s'étend longitudinalement selon une direction perpendiculaire à l'axe de coulissement C. La tige 15 s'étend ici dans le prolongement de la deuxième portion 22 du dispositif de liaison 12.

Selon un autre aspect de l'invention illustré à la figure 8, la tige 15 comprend une première zone 51 en contact avec le corps 14 du moyen de réglage 13 et qui s'étend longitudinalement selon une direction parallèle à l'axe optique A. La tige 15 comprend également une deuxième zone 52 en contact avec le dispositif de liaison 12 et qui s'étend longitudinalement selon une direction perpendiculaire à l'axe de coulissement C. La première et la deuxième zone 51, 52 formant un angle, dit angle de tige γ. L'angle de tige γ est, par exemple, ajustable. La première et la deuxième zone peuvent en effet pivoter l'une autour de l'autre, dans le plan longitudinal et autour d'un axe perpendiculaire au plan longitudinal pour faire varier l'angle de tige γ. L'angle de tige γ peut ainsi s'adapter par rapport à l'angle α et/ou à l'angle β définis précédemment de façon à ce que la deuxième zone 52 reste étendue dans une direction perpendiculaire à l'axe de coulissement C. Cette adaptation de l'angle tige γ permet ainsi d'adapter le même ensemble conforme à l'invention pour différents modèles de projecteur et donc différents modèle de véhicule.

## Revendications

1. Ensemble (10) pour projecteur de véhicule automobile comprenant:
- un module optique (7) de dispositif d'éclairage ou de signalisation de véhicule apte à projeter un faisceau lumineux selon un axe optique (A),
- un support (11) de module optique (7),
- un moyen de réglage (13) de la position du support (11) de module optique (7), et
- un dispositif de liaison (12) entre le support (11) de module optique (7) et le moyen de réglage (13),
ledit dispositif de liaison (12) comprenant une première portion (21) apte à autoriser un déplacement dudit moyen de réglage (13) selon un axe de coulissement (C), **caractérisé par le fait que** l'axe de coulissement (C) est orienté selon un angle d'inclinaison (α) compris entre 5° et 45° par rapport à un axe vertical (V) perpendiculaire à l'axe optique (A).

2. Ensemble (10) selon la revendication 1, destiné à être monté dans un véhicule, dans lequel le module optique (7) projette un faisceau lumineux selon un axe optique (A), ledit axe de coulissement (C) étant situé dans un plan longitudinal qui passe par l'axe optique (A) et l'axe vertical (V).

3. Ensemble (10) selon l'une des revendications 1 ou 2, dans lequel ladite première portion (21) comprend une partie supérieure (23) et une partie inférieure (24), ladite partie supérieure (23) étant plus proche du support (11) que la partie inférieure (24) selon l'axe optique (A).

4. Ensemble (10) selon l'une quelconque des revendications précédentes, dans lequel l'angle d'inclinaison (α) est ajustable.

5. Ensemble (10) selon l'une quelconque des revendications 2 à 4, dans lequel l'ensemble (10) comprend une pièce intermédiaire (30) s'emmanchant dans le support (31) et recevant le dispositif de liaison (12).

6. Ensemble (10) selon la revendication 5, dans lequel une première partie (31) de la pièce intermédiaire (30) s'étend longitudinalement selon une direction parallèle à l'axe optique (A), une deuxième partie (32) de la pièce intermédiaire (30) s'étend longitudinalement selon une direction perpendiculaire à l'axe de coulissement (C), la première partie (31) formant un angle avec la deuxième partie (32), dit angle intermédiaire (β).

7. Ensemble (10) selon la revendication 6, dans lequel l'angle intermédiaire (β) est ajustable.

8. Ensemble (10) selon la revendication 7, dans lequel la pièce intermédiaire (30) comprend un arbre de rotation (35) autour duquel la première et/ou la deuxième partie (31, 32) est apte à pivoter et un système de blocage (36) apte à bloquer la deuxième partie (32) par rapport à la première partie (31).

9. Ensemble (10) selon l'une quelconque des revendications 2 à 8, dans lequel le dispositif de liaison (12) comprend une deuxième portion (22) s'emmanchant dans le support (11) et/ou dans la pièce intermédiaire (30), ladite deuxième portion (22) s'étendant longitudinalement selon une direction parallèle à l'axe optique (A).

10. Ensemble (10) selon l'une quelconque des revendications 2 à 9, ledit ensemble (10) comprend ledit moyen de réglage (13) de position du support (11).

11. Ensemble (10) selon la revendication 10, dans lequel la première portion (21) du dispositif de liaison (12) est une glissière (40) dont le degré de liberté en translation s'étend selon l'axe de coulissement (C), ladite glissière (40) comprenant une paroi (41) définissant un volume interne (42) et une ouverture s'étendant selon un plan parallèle à l'axe de coulissement (C), le moyen de réglage (13) comprenant un corps (14) duquel débouche une tige (15) munie à une première extrémité distale d'un moyen d'accrochage (17) apte à se déplacer à l'intérieur dudit volume interne (42).

12. Ensemble (10) selon la revendication 11, dans lequel ledit moyen d'accrochage (17) est une sphère (17) coupée selon une direction parallèle à l'axe de coulissement (C).

13. Ensemble (10) selon la revendication 11 ou 12, dans lequel la tige (15) comprend une première zone (51) en contact avec le corps (14) qui s'étend longitudinalement selon une direction parallèle à l'axe optique (A) et une deuxième zone (52) en contact avec le dispositif de liaison (12) qui s'étend longitudinalement selon une direction perpendiculaire à l'axe de coulissement (C), la première et la deuxième zone (51, 52) formant un angle, dit angle de tige (γ).

14. Ensemble (10) selon la revendication 13, dans lequel l'angle tige (γ) est ajustable.

15. Dispositif d'éclairage et/ou de signalisation (1) pour véhicule comprenant un boîtier (4) formé par un élément transparent (5), ledit boîtier (4) et ledit élément transparent (5) délimitant un volume interne (6) dans lequel est installé un module optique (3), **caractérisé en ce qu'**il comprend un ensemble (10) selon l'une quelconque des revendications précédentes.

16. Dispositif d'éclairage et/ou de signalisation (1) selon la revendication 15, dans lequel ledit moyen de réglage (13) de la position du support (11) est directement relié mécaniquement au boîtier (4).

## Patentansprüche

1. Einheit (10) für einen Kraftfahrzeugscheinwerfer, umfassend:
- ein optisches Modul (7) einer Beleuchtungs- oder Signalisierungsvorrichtung eines Fahrzeugs, das geeignet ist, einen Lichtstrahl entlang einer optischen Achse (A) zu projizieren;
- einen Träger (11) eines optischen Moduls (7),
- ein Mittel zum Einstellen (13) der Position des Trägers (11) eines optischen Moduls (7), und
- eine Verbindungsvorrichtung (12) zwischen dem Träger (11) eines optischen Moduls (7) und dem Mittel zum Einstellen (13),
wobei die die Verbindungsvorrichtung (12) einen ersten Abschnitt (21) umfasst, der geeignet ist, eine Bewegung des Mittels zum Einstellen (13) entlang einer Verschiebungsachse (C) zu gestatten, **dadurch gekennzeichnet, dass** die Verschiebungsachse (C) in einem Neigungswinkel (α) zwischen 5° und 45° bezogen auf eine vertikale Achse (V) orientiert ist, die senkrecht zur optischen Achse (A) verläuft.

2. Einheit (10) nach Anspruch 1, die dazu bestimmt ist, in einem Fahrzeug eingebaut zu sein, wobei das optische Modul (7) einen Lichtstrahl entlang einer optischen Achse (A) projiziert, wobei die Verschiebungsachse (C) in einer Längsebene liegt, die durch die optische Achse (A) und die vertikale Achse (V) verläuft.

3. Einheit (10) nach einem der Ansprüche 1 oder 2, wobei der erste Abschnitt (21) einen oberen Bereich (23) und einen unteren Bereich (24) umfasst, wobei der obere Bereich (23) näher an dem Träger (11) liegt als der untere Bereich (24) entlang der optischen Achse (A).

4. Einheit (10) nach einem der vorhergehenden Ansprüche, wobei der Neigungswinkel (α) verstellbar ist.

5. Einheit (10) nach einem der Ansprüche 2 bis 4, wobei die Einheit (10) ein Zwischenstück (30) umfasst, das in den Träger (31) eingesetzt ist und die Verbindungsvorrichtung (12) aufnimmt.

6. Einheit (10) nach Anspruch 5, wobei sich ein erster Bereich (31) des Zwischenstücks (30) längs entlang einer Richtung parallel zur optischen Achse (A) erstreckt, ein zweiter Bereich (32) des Zwischenstücks (30) längs entlang einer Richtung senkrecht zur Verschiebungsachse (C) erstreckt, wobei der erste Bereich (31) einen Winkel mit dem zweiten Bereich (32), Zwischenwinkel (β) genannt, bildet.

7. Einheit (10) nach Anspruch 6, wobei der Zwischenwinkel (β) verstellbar ist.

8. Einheit (10) nach Anspruch 7, wobei das Zwischenstück (30) eine Drehwelle (35), um welche der erste und/oder der zweite Bereich (31, 32) schwenken kann, und ein Blockiersystem (36), das geeignet ist, den zweiten Bereich (32) bezogen auf den ersten Bereich (31) zu blockieren, umfasst.

9. Einheit (10) nach einem der Ansprüche 2 bis 8, wobei die Verbindungsvorrichtung (12) einen zweiten Abschnitt (22) umfasst, der in den Träger (11) und/oder das Zwischenstück (30) eingesetzt ist, wobei sich der zweite Abschnitt (22) in Längsrichtung entlang einer Richtung parallel zur optischen Achse (A) erstreckt.

10. Einheit (10) nach einem der Ansprüche 2 bis 9, wobei die Einheit (10) das Mittel zum Einstellen (13) einer Position des Trägers (11) umfasst.

11. Einheit (10) nach Anspruch 10, wobei der erste Abschnitt (21) der Verbindungsvorrichtung (12) eine Gleitführung (40) ist, deren Translationsfreiheitsgrad sich entlang der Verschiebungsachse (C) erstreckt, wobei die Gleitführung (40) eine Wand (41), die ein Innenvolumen (42) definiert, und eine Öffnung, die sich gemäß einer Ebene parallel zur Verschiebungsachse (C) erstreckt, umfasst und wobei das Mittel zum Einstellen (13) einen Körper (14) umfasst, von dem eine Stange (15) hervortritt, die an einem ersten distalen Ende mit einem Befestigungsmittel (17) versehen ist, das in der Lage ist, sich innerhalb des Innenvolumens (42) zu bewegen.

12. Einheit (10) nach Anspruch 11, wobei das Befestigungsmittel (17) eine Kugel (17) ist, die entlang einer Richtung parallel zur Verschiebungsachse (C) geteilt ist.

13. Einheit (10) nach Anspruch 11 oder 12, wobei die Stange (15) eine erste Zone (51) in Kontakt mit dem Körper (14), die sich in Längsrichtung entlang einer Richtung parallel zur optischen Achse (A) erstreckt, und eine zweite Zone (52) in Kontakt mit der Verbindungsvorrichtung (12), die sich in Längsrichtung entlang einer Richtung senkrecht zur Verschiebungsachse (C) erstreckt, umfasst, wobei die erste und die zweite Zone (51, 52) einen Winkel bilden, der Stangenwinkel (y) genannt wird.

14. Einheit (10) nach Anspruch 13, wobei der Stangenwinkel (y) verstellbar ist.

15. Beleuchtungs- und/oder Signalisierungsvorrichtung (1) für ein Fahrzeug, umfassend ein Gehäuse (4), das von einem transparenten Element (5) gebildet ist, wobei das Gehäuse (4) und das transparente Element (5) ein Innenvolumen (6) begrenzen, in dem ein optisches Modul (3) eingebaut ist, **dadurch gekennzeichnet, dass** sie eine Einheit (10) nach einem der vorhergehenden Ansprüche umfasst.

16. Beleuchtungs- und/oder Signalisierungsvorrichtung (1) nach Anspruch 15, wobei das Mittel zum Einstellen (13) der Position des Trägers (11) mechanisch direkt mit dem Gehäuse (4) verbunden ist.

## Claims

1. Assembly (10) for a motor vehicle headlight comprising:
- an optical module (7) of a vehicle lighting or signalling device capable of projecting a light beam along an optical axis (A),
- a support (11) for the optical module (7),
- a means (13) for adjusting the position of the support (11) of the optical module (7), and
- a connecting device (12) between the support (11) of the optical module (7) and the adjustment means (13), said connecting device (12) comprising a first portion (21) capable of allowing a displacement of said adjustment means (13) along a sliding axis (C),
**characterized in that** the sliding axis (C) is oriented according to an angle of inclination (α) of between 5° and 45° relative to a vertical axis (V) at right angles to the optical axis (A).

2. Assembly (10) according to Claim 1, intended to be mounted in a vehicle, in which the optical module (7) projects a light beam along an optical axis (A), said sliding axis (C) being situated in a longitudinal plane which passes through the optical axis (A) and the vertical axis (V).

3. Assembly (10) according to one of Claims 1 or 2, in which said first portion (21) comprises an upper part (23) and a lower part (24), said upper part (23) being closer to the support (11) than the lower part (24) along the optical axis (A).

4. Assembly (10) according to any one of the preceding claims, in which the angle of inclination (α) is adjustable.

5. Assembly (10) according to any one of Claims 2 to 4, in which the assembly (10) comprises an intermediate piece (30) that is shrink-fitted in the support (31) and that receives the connecting device (12).

6. Assembly (10) according to Claim 5, in which a first part (31) of the intermediate piece (30) extends longitudinally along a direction parallel to the optical axis (A), a second part (32) of the intermediate piece (30) extends longitudinally in a direction at right angles to the sliding axis (C), the first part (31) forming an angle with the second part (32), called intermediate angle (β).

7. Assembly (10) according to Claim 6, in which the intermediate angle (β) is adjustable.

8. Assembly (10) according to Claim 7, in which the intermediate piece (30) comprises a rotation shaft (35) about which the first and/or the second part (31, 32) is capable of pivoting and a blocking system (36) capable of blocking the second part (32) relative to the first part (31).

9. Assembly (10) according to any one of Claims 2 to 8, in which the connecting device (12) comprises a second portion (22) that is shrink-fitted in the support (11) and/or in the intermediate piece (30), said second portion (22) extending longitudinally in a direction parallel to the optical axis (A).

10. Assembly (10) according to any one of Claims 2 to 9, said assembly (10) comprising said means (13) for adjusting the position of the support (11).

11. Assembly (10) according to Claim 10, in which the first portion (21) of the connecting device (12) is a runner (40) of which the degree of freedom in translation extends along the sliding axis (C), said runner (40) comprising a wall (41) defining an internal volume (42) and an opening extending along a plane parallel to the sliding axis (C), the adjustment means (13) comprising a body (14) from which emerges a rod (15) provided at a first distal end of an attachment means (17) capable of being displaced inside said internal volume (42).

12. Assembly (10) according to Claim 11, in which said attachment means (17) is a sphere (17) cut in a direction parallel to the sliding axis (C).

13. Assembly (10) according to Claim 11 or 12, in which the rod (15) comprises a first zone (51) in contact with the body (14) which extends longitudinally in a direction parallel to the optical axis (A) and a second zone (52) in contact with the connecting device (12) which extends longitudinally in a direction at right angles to the sliding axis (C), the first and the second zones (51, 52) forming an angle, called rod angle (γ).

14. Assembly (10) according to Claim 13, in which the rod angle (γ) is adjustable.

15. Lighting and/or signalling device (1) for a vehicle comprising a housing (4) formed by a transparent element (5), said housing (4) and said transparent element (5) delimiting an internal volume (6) in which is installed an optical module (3), **characterized in that** it comprises an assembly (10) according to any one of the preceding claims.

16. Lighting and/or signalling device (1) according to Claim 15, in which said means (13) for adjusting the position of the support (11) is directly linked mechanically to the housing (4).
